(19)

Europäisches Patentamt

European Patent Office

Office européen des brevets

(11)     **EP 4 679 041 A1**

(12)     **EUROPEAN PATENT APPLICATION**

(43) Date of publication:
     **14.01.2026 Bulletin 2026/03**

(21) Application number: **24187552.5**

(22) Date of filing: **09.07.2024**

(51) International Patent Classification (IPC):
     ***G01F 15/02*** (2006.01)      ***G01N 9/24*** (2006.01)
     ***G01F 1/667*** (2022.01)

(52) Cooperative Patent Classification (CPC):
     **G01F 15/024; G01N 9/24;** G01F 1/667;
     G01N 2291/02818

(84) Designated Contracting States:
     **AL AT BE BG CH CY CZ DE DK EE ES FI FR GB
     GR HR HU IE IS IT LI LT LU LV MC ME MK MT NL
     NO PL PT RO RS SE SI SK SM TR**
     Designated Extension States:
     **BA**
     Designated Validation States:
     **GE KH MA MD TN**

(71) Applicant: **Sartorius Stedim Biotech GmbH
     37079 Göttingen (DE)**

(72) Inventors:
     • **LÖFFLER, Manuel
       37079 Göttingen (DE)**
     • **PREDIGER, Andreas
       37079 Göttingen (DE)**
     • **BODE, Matthias
       37079 Göttingen (DE)**

(74) Representative: **Prinz & Partner mbB
     Patent- und Rechtsanwälte
     Rundfunkplatz 2
     80335 München (DE)**

(54)     **METHOD OF AND DEVICE FOR DETERMINING A FLOW VELOCITY OF A LIQUID MEDIUM**

(57)     A method of determining a flow velocity of a liquid medium comprises the following steps: a) measuring at least one parameter of the medium that is correlated with the density of the medium; b) predicting the density based on the measured parameter; c) measuring a flow velocity of the medium using an ultrasonic flowmeter (10); and d) calculating a corrected flow velocity based on the measured flow velocity and the predicted density. A device assembly for determining a flow velocity of a liquid medium comprises an ultrasonic flowmeter (10) for measuring a flow velocity of the medium, and at least one sensor (24) for measuring a parameter of the medium that is correlated with the density of the medium. The device assembly further comprises a processing unit (26) for predicting the density based on the measured parameter, and for calculating a corrected flow velocity based on the measured flow velocity and the predicted density. The device assembly is configured to perform the method defined above.

Fig. 2

**Description**

The invention relates to a method of determining a flow velocity of a liquid medium. The invention further relates to a device assembly for determining a flow velocity of a liquid medium.

Especially when fluids are examined, some measured variables are influenced by the properties of the medium or the operation conditions in a way that either distorts the measurement value of the variable or affects it in an undesirable manner. Examples of influenced variables include flow rate measurements as well as static pressure measurements in hose lines, and pressure, optical and spectrometric measurements in vessels, such as fermenters.

The invention focuses on flow measurements in a bioprocess environment using an ultrasonic flowmeter. An ultrasonic flowmeter works by sending ultrasonic pulses between transducers through a fluid in a pipe. It measures the difference in transit times of these pulses downstream and upstream, which correlates to the fluid's flow velocity. From the flow velocity and the flow cross-section the flow rate can be determined.

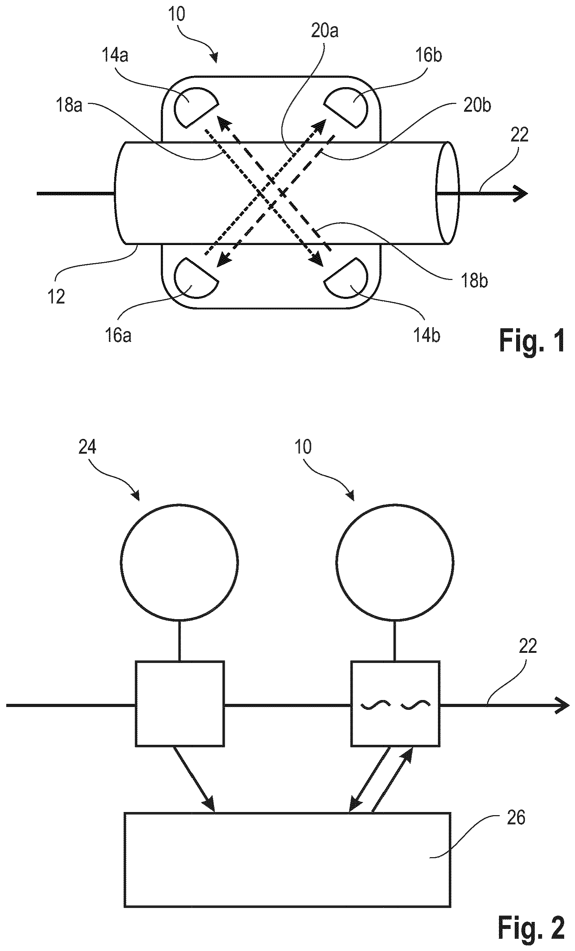

Figure 1 depicts the measurement principle of an ultrasonic flowmeter 10 that is clamped on a flow pipe 12 through which a liquid medium flows in the direction of the arrow. Inside the flowmeter 10 two pairs of ultrasound sensors 14a, 14b and 16a, 16b function both as a source and a detector for ultrasound waves. The sensor pairs 14a, 14b and 16a, 16b are oriented diagonally in the corners of the flowmeter. Each sensor 14a, 14b, 16a, 16b sends an ultrasound wave 18a, 18b, 20a, 20b to its opposite partner. The waves 18a, 18b, 20a, 20b travel through the flowing liquid medium at a certain angle, such that they either travel downstream and are accelerated by the flow stream 22 or they travel upstream and are decelerated by the flow stream 22. This leads to a transit time difference between the two signals that is proportional to the flow velocity, from which the flow rate can be calculated using the inner diameter of the flow pipe 12. To increase measurement accuracy, the two sensor pairs 14a, 14b and 16a, 16b measure the transit time difference simultaneously.

The measuring principle is essentially influenced by the transition point between laminar and turbulent flow affected by the Reynolds number. Moreover, a change in the (acoustic) density of the medium causes a change in the velocity of the ultrasonic signals. Accordingly, a density change of the medium has a direct impact on the accuracy of the measured flow value. In general, the velocity of an ultrasonic signal depends on the density of a liquid medium according to the following formula:

$$C_0 = \sqrt{k/\rho}$$

$C_0$ - velocity of ultrasonic signal in static fluid

k - bulk modulus

$\rho$ - density of liquid

The density of fluids is strongly influenced by conductive substances such as salts. When using fluids with high salt concentrations, variations in the accuracy of flow measurements using an ultrasonic flowmeter may be observed.

Some prior art measurement systems involve calibrations for various media, which can be manually selected by the user. However, each calibration is usually only valid for one medium at a specific temperature and not for a range of salt concentrations, for example. Accordingly, the measurement variations cannot be compensated gradually and automatically. According to the best current praxis, compensation factors for different densities can be determined and stored in a look-up table. If the liquid density is known, the corresponding compensation factor can be applied.

In biopharmaceutical processes, especially in chromatography unit operations, the usage of salinity gradients is a well-established procedure. Accordingly, there is a need for a technical solution in this context that can dynamically adapt to changing media densities.

It is an object of the invention to meet this need and to enable accurate flow measurements in media with different densities using ultrasonic flow sensor technology.

The above problem is solved by a method according to claim 1 and by a device assembly according to claim 12. Advantageous and expedient embodiments of the invention are apparent from the dependent claims.

The invention provides a method of determining a flow velocity of a liquid medium comprising the following steps: a) measuring at least one parameter of the medium that is correlated with the density of the medium; b) predicting the density based on the measured parameter; c) measuring a flow velocity of the medium using an ultrasonic flowmeter; and d) calculating a corrected flow velocity based on the measured flow velocity and the predicted density.

The invention is based on the finding that for a more accurate determination of the flow velocity of a liquid medium using an ultrasonic flowmeter, it is necessary to take into account the actual density of the medium. When the density is known or can be predicted based on reasonable assumptions, then the impact on the measured flow velocity can be compensated appropriately.

In this context, "a parameter of the medium that is correlated with the density of the medium" is to be understood as a parameter having a known relationship with the density of the medium. This means that, according to the invention, the prediction of the density of the medium is based on a measurement of a parameter that allows an appropriate conclusion on the density. With repeated measurements, a dynamic adaption of the flow rate compensation to gradually or abruptly changing media densities is possible.

A parameter that is well suited for the purpose of the invention is the electrical conductivity of the liquid medium. As explained above, the density of a liquid medium is strongly influenced by conductive substances, especially salts. This means that with a conductivity measurement, especially with a temperature-compensated conductivity measurement, the salt concentration, and thus the density of the medium can be accurately predicted, and the measurement of the flow velocity can be adjusted accordingly, so that the influence of the conductive substances on the measured flow velocity can be removed.

As already mentioned, the density of a fluid is strongly influenced by conductive substances such as salts. Therefore, according to a preferred approach, the step of predicting the density of the medium is performed such that, based on the measurement of an appropriate parameter, a salt concentration of the medium is predicted first. Due to the known relationship, the density of the medium can then be predicted based on the predicted salt concentration.

According to a preferred embodiment of the invention, the method further comprises the following steps: e) building a continuous compensation function, the compensation function assigning compensation values to density values; and f) applying the compensation function when calculating the corrected flow velocity based on the measured flow velocity and the predicted density. A continuous compensation function is superior to a simple look-up table that does not provide a compensation value for each predicted density value. If a predicted density value is not listed in a look-up table, the compensation value assigned to an adjacent (higher or lower) density value can be used, which however may yield an inaccurate result. This problem is avoided with a previously built continuous compensation function.

Preferably, a plurality of compensation functions is built in advance, at least one of the compensation functions being a generic compensation function for unknown media and the other ones being compensation functions specific for several known media. Depending on the available information about the composition of the medium whose flow velocity is to be determined, an appropriate compensation function is selected and applied.

If possible, the measurement of the parameter that is correlated with the density of the medium and the measurement of the flow velocity with the ultrasonic flowmeter are performed simultaneously, preferably at the same location.

When these measurements are performed at different locations, it has to be considered that it is possible that the density varies within the path between the measurement locations. In order to eliminate the effect of a possible change in the density, the measurements can be performed sequentially and the following approach may be applied: The parameter that is correlated with the density is measured at a first location at a first point in time, and the flow velocity is measured at a second location at a second point in time, the second location being downstream of the first location. The second point in time is calculated as the point in time when a portion of the medium that has passed the first location at the first point in time has reached the second location. The calculation of the second point in time is based on an estimated flow velocity of the medium or a previously measured flow velocity value. With this approach it can be assured that the correction of the measured flow velocity is based on a parameter value of the same portion of the medium whose flow velocity is then measured at the second location.

Generally, it is also possible that the flow velocity is measured first at a location upstream of the location where the parameter is measured afterwards. This results in a delay of the compensation calculation, which however might be acceptable if the delay is not significant.

When the flow velocity determined according to the invention is used to monitor or control a biopharmaceutical process, the step of predicting the density and the step of calculating a corrected flow velocity should be performed in real-time.

In order to provide even more accurate and robust results, a plurality of different parameters that are correlated with the density of the medium, can be measured and used to predict the density. For example, both electrical conductivity and turbidity of the medium can be measured to predict the density.

Generally, apart from electrical conductivity, especially one or more of the following parameters can be measured and used for the prediction of the density: capacitance; turbidity; a UV or UV-Vis absorption; viscosity. The parameter(s) is/are chosen depending on the intended use case. Specifically for cell containing media (e.g., for perfusion lines before an ATF module) a capacitance measurement and/or an optical measurement procedure (such as turbidity) can be used. Specifically for DNA and/or protein containing media (relevant for TFF, NFF, chromatography applications) a UV or UV-Vis spectrometer can be used.

When several values of different parameters are available, a previously built multivariate model can be used to accurately predict the density.

The invention also provides a device assembly for determining a flow velocity of a liquid medium. The device assembly comprises an ultrasonic flowmeter for measuring a flow velocity of the medium, and at least one sensor for measuring a parameter of the medium that is correlated with the density of the medium. The device assembly further comprises a processing unit for predicting the density based on the measured parameter, and for calculating a corrected flow velocity based on the measured flow velocity and the predicted density. The device assembly is configured to perform the method defined above.

In the sense of the invention, the term "sensor" is to be understood broadly, i.e., as a device measuring a certain parameter of the medium, including more complex devices such as spectrometers etc.

A major advantage of the device assembly according to the invention is that the determination of the flow velocity can be automated. The measured flow velocity and the correlated measured additional parameter can be automatically transmitted to and automatically evaluated in the processing unit to automatically calculate a corrected flow velocity.

As explained before, a suitable parameter for predicting the density is the electrical conductivity of the medium. Therefore, the at least one sensor preferably is a sensor measuring electrical conductivity.

According to a preferred setup alternative, the ultrasonic flowmeter and the additional sensor are integrated in one housing, which facilitates the handling of the device assembly.

In addition, the processing unit can be integrated in the housing, e.g., as a part of the flowmeter or the additional sensor. On the other hand, the processing unit can also be integrated in a (remote) higher-level process control system.

According to a more complex approach, the device assembly comprises a plurality of sensors, the sensors measuring different parameters of the medium that are correlated with the density of the medium. The processing unit is configured to predict the density of the medium based on the plurality of measured parameters. The respective sensors may also be used for other purposes in a running process, or, the other way round, if certain sensors are present in a process setup anyway, they can also be used for predicting the density.

The sensor or the plurality of sensors may include at least one of the following: a capacitive sensor; an optical sensor, especially an optical sensor measuring turbidity; a UV or UV-Vis spectrometer; a viscosity sensor.

Further features and advantages of the invention will become apparent from the following description and from the accompanying drawings to which reference is made. In the drawings:

- Figure 1 shows the measuring principle of a flowmeter; and

- Figure 2 shows a preferred basic setup of a device assembly according to a preferred embodiment of the invention.

The measuring principle of an ultrasonic flowmeter 10 that is clamped on a flow pipe 12 through which a liquid medium flows has already been described with reference to Figure 1.

In Figure 2 a basic setup of a device assembly for determining a flow velocity of a liquid medium is shown. The device assembly includes an ultrasonic flowmeter 10, preferably one that uses a measuring principle like the one shown in Figure 1.

The device assembly also includes at least one additional sensor 24 for measuring a parameter of the liquid medium that is correlated with the actual density of the medium. In the following, the additional sensor 24 is considered to be a conductivity sensor, i.e. a sensor that is capable of measuring the electrical conductivity of the liquid medium in the flow pipe 12. Since electrical conductivity of a liquid medium varies widely depending on the temperature of the medium, a conductivity sensor typically includes a temperature sensor to enable compensation of the temperature effect.

The device assembly further includes a processing unit 26. The processing unit 26 is configured to receive data from the flowmeter 10 and from the additional sensor 24. The processing unit 26 may also be configured to send data to the flowmeter 10 and/or to the additional sensor 24.

Preferably, the flowmeter 10 and the additional sensor 24 are located in very close proximity to each other, what could - somewhat imprecisely - be described as "at the same location". In the preferred setup shown in Figure 2, the additional sensor 24 is located at a first location that is (slightly) upstream of a second location where the flowmeter 10 is located.

The flowmeter 10 and the additional sensor 24 may be integrated in one housing (not shown), thus forming a common sensor unit. Also, the processing unit 26 may be integrated in the housing, and the processing unit 26 may even be directly integrated in the flowmeter 10 or in the additional sensor 24. According to an alternative, the processing unit 26 can be integrated in a remote higher-level process control system that monitors and/or controls the process for which the medium is used.

Preferably, several compensation functions are stored in a memory of the processing unit 26. The compensation functions are continuous functions assigning compensation values to density values. This means that, within a certain range, the compensation function can associate an appropriate compensation value to each predicted density value. Each compensation value is representative of a corresponding change of the density of the medium. At least one of the compensation functions is a generic function for unknown media, and the other functions are each specific for a known medium, in particular a known composition of a medium.

The processing unit 26 may also include an algorithm based on a multivariate model, which will be explained later.

In the following it is described how the flow velocity and the flow rate of the liquid medium flowing through the flow pipe 12 is determined with the device assembly shown in Figure 2.

At a first point in time the additional sensor 24 measures a parameter of the medium that is correlated with the density of the medium. In case the additional sensor 24 is a conductivity sensor, the temperature of the medium is measured at the same time. The sensor data is sent to the processing unit 26 where the density of the medium is predicted based on the measured value of the parameter. If necessary, the influence of the temperature on the measured value of the parameter is taken into account.

At a second point in time the ultrasonic flowmeter 10 performs a flow velocity measurement. The measured value is sent to the processing unit 26 where a corrected flow velocity based on the measured flow velocity and the predicted density is calculated.

In case the flowmeter 10 and the additional sensor 24 are in very close proximity to each other, the first and second points in time can be the same, i.e. the measurements are performed simultaneously. On the other hand, when the flowmeter 10 and the additional sensor are further apart from each other and/or the actual flow velocity of the medium is rather slow, the second point in time can be calculated such that the flowmeter 10 performs the flow velocity measurement when the portion of the medium that has passed the additional sensor 24 at the first point in time has reached the flowmeter 10. For the calculation of the second point in time an estimated flow velocity of the medium or a previously measured flow velocity value can be used.

When several compensation functions are available, one of the functions is selected, either manually by an operator or automatically by the processing unit 24, for the calculation of the corrected flow velocity. In particular, if the composition of the medium is not known or when no other compensation function is assumed to fit better (the medium is considered "unknown"), a generic compensation function is used. However, if the composition of the medium is known, or if enough details are known, and if an appropriate compensation function for this medium is available, then this specific compensation function is used to yield more accurate results.

The compensation functions assign a compensation value to the predicted density value. The compensation factor is applied to correct the measured flow velocity value. Thus, determination of the actual flow velocity of the medium is more accurate. From the corrected flow velocity and the inner diameter of the flow pipe, a corrected flow rate can be determined.

Especially when more additional sensors measuring different parameters are used, the signals of all sensors can be supplied to the processing unit 26 and fed into an appropriate multivariate model, so that the density can be predicted more accurately before the compensation value is assigned and the corrected flow velocity is calculated.

With respect to application fields of the invention, determining an accurate flow velocity of a liquid medium as described above can be used in the following steps of biopharmaceutical product manufacturing (the list not being exhaustive): upstream and downstream bioprocessing; cell culture media preparation; buffer preparation; protein purification; virus inactivation; final formulation.

List of Reference Signs

| 10 | flowmeter |
|----|-----------|
| 12 | flow pipe |
| 14a | ultrasound sensor (first pair) |
| 14b | ultrasound sensor (first pair) |
| 16a | ultrasound sensor (second pair) |
| 16b | ultrasound sensor (second pair) |
| 18a | ultrasound wave (first pair) |
| 18b | ultrasound wave (first pair) |
| 20a | ultrasound wave (second pair) |
| 20b | ultrasound wave (second pair) |
| 22 | flow stream |
| 24 | additional sensor |
| 26 | processing unit |

**Claims**

1. A method of determining a flow velocity of a liquid medium, the method comprising the following steps:

   a) measuring at least one parameter of the medium that is correlated with the density of the medium;
   b) predicting the density based on the measured parameter;
   c) measuring a flow velocity of the medium using an ultrasonic flowmeter (10); and
   d) calculating a corrected flow velocity based on the measured flow velocity and the predicted density.

2. The method according to claim 1, **characterized in that** the measured parameter is the electrical conductivity of the medium.

3. The method according to claim 1 or 2, **characterized in that** step b) includes predicting a salt concentration based on the measured parameter and **in that** the density of the medium is predicted based on the predicted salt concentration.

4. The method according to any of the preceding claims, **characterized in that** the method further comprises the following steps:

   e) building a continuous compensation function, the compensation function assigning compensation values to density values;
   f) applying the compensation function in step d).

5. The method according to claim 4, **characterized in that** in step e) a plurality of compensation functions is built, at least one of the compensation functions being a generic compensation function for unknown media and at least another one being a compensation function specific for a known medium, the method further comprising the following step g) being performed before step f):

- g) selecting which of the compensation functions is to be applied in step f), the selection depending on the knowledge of the medium.

6. The method according to any of the preceding claims, **characterized in that** steps a) and c) are performed simultaneously, preferably at the same location.

7. The method according to any of claims 1 to 5, **characterized in that** steps a) and c) are performed sequentially, wherein the parameter is measured at a first location at a first point in time, and the flow velocity is measured at a second location at a second point in time, the second location being downstream of the first location, the second point in time being calculated as the point in time when a portion of the medium that has passed the first location at the first point in time has reached the second location, the calculation of the second point in time being based on an estimated flow velocity of the medium or a previously measured flow velocity value.

8. The method according to any of the preceding claims, **characterized in that** steps b) and d) are performed in real-time.

9. The method according to any of the preceding claims, **characterized in that** step a) includes measuring different parameters of the medium that are correlated with the density of the medium, and **in that** the plurality of measured parameters is used in step b).

10. The method according to any of the preceding claims, **characterized in that** the measured parameter(s) include at least one of the following: capacitance; turbidity; a UV or UV-Vis absorption; viscosity.

11. The method according to any of the preceding claims, **characterized in that** in step b) a multivariate model is used to predict the density.

12. A device assembly for determining a flow velocity of a liquid medium, the device assembly comprising

an ultrasonic flowmeter (10) for measuring a flow velocity of the medium,
at least one sensor (24) for measuring a parameter of the medium that is correlated with the density of the medium, and
a processing unit (26) for predicting the density based on the measured parameter, and for calculating a corrected flow velocity based on the measured flow velocity and the predicted density,
the device assembly being configured to perform the method according to any of the preceding claims.

13. The device according to claim 12, **characterized in that** the sensor (24) is a sensor measuring electrical conductivity.

14. The device according to claim 12 or 13, **characterized in that** the ultrasonic flowmeter (10) and the sensor (24) are integrated in one housing.

15. The device according to claim 14, **characterized in that** also the processing unit (26) is integrated in the housing.

16. The device according to any of claims 12 to 14, **characterized in that** the processing unit (26) is integrated in a higher-level process control system.

17. The device according to any of claims 12 to 16, **characterized in that** the device assembly comprises a plurality of sensors (24), the sensors (24) measuring different parameters of the medium that are correlated with the density of the medium, and **in that** the processing unit (26) is configured to predict the density of the medium based on the plurality of measured parameters.

18. The device according to any of claims 12 to 17, **characterized in that** the sensor (24) or the plurality of sensors (24) includes at least one of the following: a capacitive sensor; an optical sensor, especially an optical sensor measuring turbidity; a UV or UV-Vis spectrometer; a viscosity sensor.

Fig. 1

Fig. 2

Europäisches
Patentamt
European
Patent Office
Office européen
des brevets

# EUROPEAN SEARCH REPORT

**Application Number**

EP 24 18 7552

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 5 608884 B2 (HONDA ELECTRONIC) 22 October 2014 (2014-10-22) | 1,4-6,8, 9,12, 14-16 | INV. G01F15/02 G01N9/24 |
| A | * paragraphs [0053], [0062], [0063], [0064], [0070], [0065], [0027], [0030], [0076], [0075]; figures 2,8 * ----- | 2,3,7, 10,11, 13,17,18 | ADD. G01F1/667 |
| A | US 2021/404990 A1 (RAJA NISHANTH [IN] ET AL) 30 December 2021 (2021-12-30) * paragraphs [0040], [0042], [0049]; figures 1C,6A,6B * ----- | 1-18 | |
| A | US 2023/160733 A1 (SAWCHUK BLAINE [CA] ET AL) 25 May 2023 (2023-05-25) * paragraphs [0024] - [0036]; figure 1 * ----- | 1-18 | |
| A | CN 114 812 713 A (MEZOLEN INSTR CHANGZHOU CO LTD) 29 July 2022 (2022-07-29) * abstract; figure 1 * ----- | 1-18 | |

**TECHNICAL FIELDS SEARCHED (IPC)**

G01F
G01N

The present search report has been drawn up for all claims

| Place of search | Date of completion of the search | Examiner |
|---|---|---|
| The Hague | 6 December 2024 | Reeb, Bertrand |

EPO FORM 1503 03.82 (P04C01)

## ANNEX TO THE EUROPEAN SEARCH REPORT
## ON EUROPEAN PATENT APPLICATION NO.

EP 24 18 7552

This annex lists the patent family members relating to the patent documents cited in the above-mentioned European search report.
The members are as contained in the European Patent Office EDP file on
The European Patent Office is in no way liable for these particulars which are merely given for the purpose of information.

06-12-2024

| Patent document cited in search report | | Publication date | Patent family member(s) | | Publication date |
|---|---|---|---|---|---|
| JP 5608884 | B2 | 22-10-2014 | JP 5608884 B2 | | 22-10-2014 |
| | | | JP 2010261873 A | | 18-11-2010 |
| US 2021404990 | A1 | 30-12-2021 | US 2021404990 A1 | | 30-12-2021 |
| | | | WO 2020100157 A1 | | 22-05-2020 |
| US 2023160733 | A1 | 25-05-2023 | CA 3182304 A1 | | 19-05-2023 |
| | | | US 2023160733 A1 | | 25-05-2023 |
| CN 114812713 | A | 29-07-2022 | NONE | | |

For more details about this annex : see Official Journal of the European Patent Office, No. 12/82